(19) **Europäisches Patentamt**
**European Patent Office**
**Office européen des brevets**

(11) Publication number: **0 066 834**
**A1**

(12) **EUROPEAN PATENT APPLICATION**

(21) Application number: **82104793.3**

(22) Date of filing: **01.06.82**

(51) Int. Cl.³: **B 65 G 53/52, F 16 L 57/00**

(30) Priority: **02.06.81 JP 80561/81**

(43) Date of publication of application: **15.12.82**
**Bulletin 82/50**

(84) Designated Contracting States: **BE DE FR GB IT NL**

(71) Applicant: **Nippon Steel Corporation,**
**6-3 Ote-machi 2-chome Chiyoda-ku, Tokyo 100 (JP)**

(72) Inventor: **Hagiwara, Takeshi c/o Nippon Steel**
**Corporation, Yawata Works 1-1-1, Edamitsu**
**Yawata-higashi-ku, Kitakyushu City Fukuoka Prefecture**
**(JP)**
Inventor: **Matsuo, Masataka c/o Nippon Steel**
**Corporation, Yawata Works 1-1-1, Edamitsu**
**Yawata-higashi-ku, Kitakyushu City Fukuoka Prefecture**
**(JP)**
Inventor: **Hamai, Kazuo c/o Nippon Steel Corporation,**
**Yawata Works 1-1-1, Edamitsu Yawata-higashi-ku,**
**Kitakyushu City Fukuoka Prefecture (JP)**

(74) Representative: **Vossius Vossius Tauchner Heunemann**
**Rauh, Siebertstrasse 4 P.O. Box 86 07 67,**
**D-8000 München 86 (DE)**

(54) **Powder conveying pipe.**

(57) A powder conveying pipe (1) comprises a pressurized-transportation pipe (2) that passes a powder entrained in a pressurized conveying fluid, a support pipe (3) coaxially accommodating the pressurized-transportation pipe (2), and support members (4) of vibration-absorbing material disposed between the two pipes so that the pressurized-transportation pipe (2) is supported in the support pipe (3).

VOSSIUS · VOSSIUS · TAUCHNER · HEUNEMANN · RAUH
PATENTANWÄLTE

0066834

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: R 892 EP                    June 1, 1982

Case:       662

NIPPON STEEL CORPORATION

Tokyo, Japan


" Powder Conveying Pipe "


This invention relates to a powder conveying pipe used for the pressurized transportation of a granular or powdery mass of metal, refractories, plastics and the like.

Because of dust pollution control regulations growing severer and increasing transportation cost, more and more granular and powdrey materials have come to be transported by pressurized conveying systems rather than conventional trucks. But these new systems are not without problems. For example, the carrying pipe suffers heavy wear and develops much vibration and noise when the material conveyed is hard and relatively large in particle size. The following is one of such examples. In the buildup or repair of furnace linings in the steel industry, refractory powder flame projection has been finding increasing use in place of a conventional technique known as the wet method. This new technique sends forth refractory powder through gas flames. For this purpose, the refractory powder has to be entrained in a pressurized gas and transported over a long distance from its storage point (e.g. a tank) to application point. This transportation is costly. In addition, the impinging powder heavily wears off the carrying pipe and generates great vibration and noise. This vibration loosens the fastening bolts on the joint flanges etc. with a resulting eruption of the dust-laden gas.

The primary object of this invention is to provide a powder conveying pipe that is not heavily worn off by the powder conveyed therethrough, develops little vibration, and possesses high durability.

A powder conveying pipe according to this invention comprises a pressurized-transportation pipe of abrasion-resisting material through which powdery material is passed entrained in a pressurized conveying fluid, a support pipe coaxially accommodating the pressurized-transportation pipe, and a support member of vibration-absorbing material that is disposed between the pressurized-transportation and support pipes so that the former rests securely on the latter.

As stated above, the powder conveying pipe of this convention is of a double structure comprising the pressurized-transportation and support pipes. Made of abrasion-resisting material, the pressurized-transportation pipe suffers much less powder-induced wear. The vibration-absorbing material disposed between the two pipes prevents the vibration and resulting noise. When the conveying distance is relatively long, the transportation and support pipes may bend down under their own weight. Without the vibration-absorbing material, the transportation pipe, made of ceramics, would break. The vibration-absorbing material used in the powder conveying pipe of this invention allows only the support pipe to bend down, keeping the transportation pipe unaffected by bending stress and preventing its breakage and other forms of damage. Even if the transportation pipe wears off to cause a leakage of the powder and conveying fluid, the support pipe prevents their eruption to the outside.

In order that the powder conveying pipe of this invention may be fully understood, an embodiment thereof will now be described by reference to an example in which it is connected to a refractory powder flame projecting burner for use in the repair of refractory furnace walls.

Steel pipe has been used for the conventional powder conveying pipes, with their bends formed by use of welded flanges. The as-perforated path within a burner block of copper, serving as a powder projecting nozzle, has been kept in direct contact with the conveyed powder.

When the powder conveyed is that of such refractory materials as alumina, silica and magnesia, impingement of their particles accelerates the abrasion of the pipe wall.

0066834

The vibration generated during transportation causes the joint connecting bolts to loosen.

Held in direct contact with the powder, the path wall inside the copper burner block has worn off faster than the steel pipe. As a consequence, the diameter of the powder projecting nozzle has sometimes become so large that it communicated with an adjacent flame nozzle to hamper normal combustion.

Take, for instance, a stainless steel pipe 25 mm in diameter and 2 mm in wall thickness through which alumina powder, 0.01 mm to 1.0 mm in particle size, was pneumatically conveyed. As a result of wearing, the pipe at bend broke when as much as 3 tons of the alumina powder had passed therethrough, with a resulting eruption of the powder-laden high-pressure air into atmosphere. When the quantity of the supplied powder reached 50 tons, fastening bolts at the joint flange loosened, as a result of the vibration of the pipe, to cause the same eruption.

A 3.0 mm diameter powder projecting nozzle in the burner became as large as 6.0 mm in diameter when the quantity of the supplied powder reached 1 ton, and communicated with a flame nozzle when the quantity reached 2 tons. Also, a stainless steel pipe, 2 mm in wall thickness, attached to an internally water-cooled gun barrel, which is connected to the burner, broke when the quantity of the supplied powder reached 10 tons.

Description of the Drawings

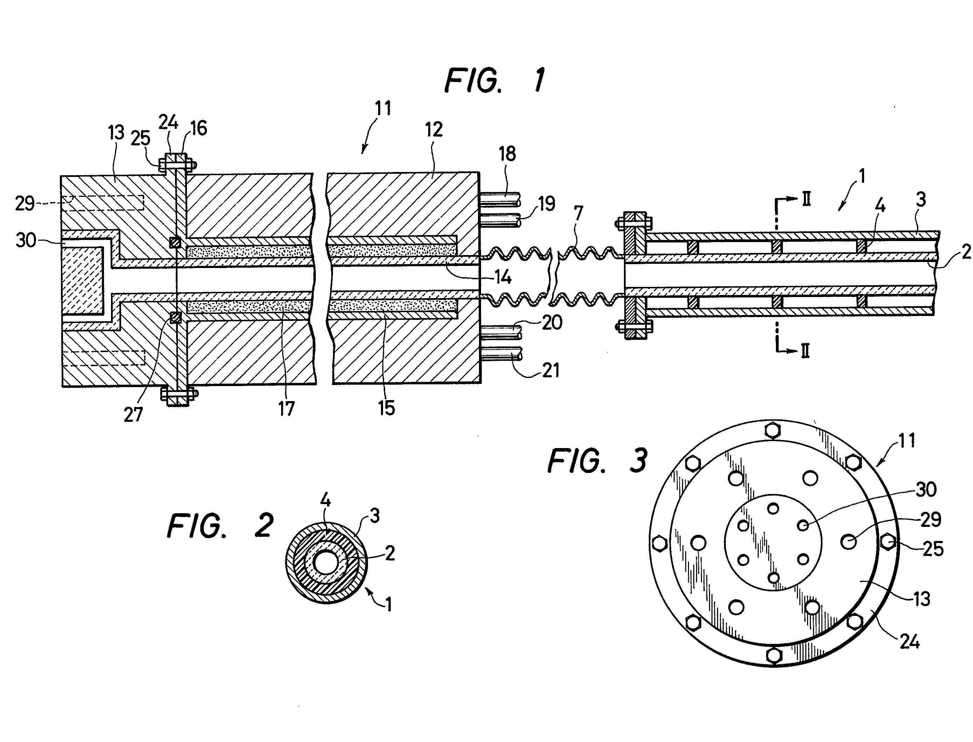

Fig. 1 is a cross-sectional view of a refractory powder flame projecting burner to which a powder conveying pipe embodying the principle of this invention is connected.

Fig. 2 is a cross section taken along the line II-II in Fig. 1.

Fig. 3 is a front view of the refractory powder flame projecting burner shown in Fig. 1.

A powder conveying pipe 1 comprises a pressurized-transportation pipe 2, a support pipe 3, and support members 4.

The pressurized-transportation pipe 2 passes a powder entrained in a pressurized conveying fluid (here, oxygen gas or air). The pressurized-transportation pipe 2 is made of alumina, mullite or other similar oxide-based refractory materials that are thermally stable and highly wear-resistant. When the conveying fluid is an inert gas, such as nitrogen gas, initiating no oxidizing reaction, the pressurized-transportation pipe may be made of such a high wear-resistant carbide as silicon carbide.

The support pipe 3, made of steel or other metal, coaxially accommodates the pressurized-transportation pipe 2.

Within the support pipe 3, the pressurized-transportation pipe 2 is supported by the support members 4. The support members 4 are ring-shaped, and fitted over the pressurized-transportation pipe 2 at suitable intervals in the longitudinal direction of the pipe. In order to absorb vibration and bending, the support members 4 are made of such materials as natural and synthetic resins.

The powder conveying pipe 1 described above is connected to a refractory powder flame projecting burner 11 through a flexible hose 7. The burner 11 comprises a gun barrel 12 and a burner tip 13. Inside the gun barrel 11, there are coaxially provided an internal pipe 14, which is made of the same material as the pressurized-transportation pipe 2, and an external steel pipe 15 having a flange 16. A heat-insulating material 17 to absorb vibration and bending is filled between the internal pipe 14 and external pipe 15. To the gun barrel 12 are attached an inflammable gas pipe 18, an oxygen pipe 19, a cooling water intake pipe 20, and a cooling water discharge pipe 21. The burner tip 13 is attached to the gun barrel 12 by fastening together a flange 24 thereof and the flange 16 of said external pipe 15 with bolts 25. The joint between the gun barrel 12 and burner tip 13 is sealed by an O-ring 27. A plurality of flame nozzles 29 and powder projecting nozzles 30 circumferentially open in the front end of the burner tip 13.

The following paragraphs describe an example of the use of the above-described powder conveying pipe according to this invention.

The pressurized-transportation pipe 2 was made of 99% alumina, with a diameter of 25 mm and a wall thickness of 2 mm. The 5 mm thick and 10 mm wide support member 4 of synthetic rubber was fitted over the pressurized-transportation pipe 2 at 1.6 m intervals. The support pipe 3 was a 35 mm diameter steel pipe.

An alumina powder, ranging between 0.01 mm and 1.0 mm in particle size, was supplied entrained in an oxygen gas under a pressure of 3 $kg/cm^2$ through the pressurized-transportation pipe 2 to the burner 11. A bent portion of the pipe 2 (not shown) wore down and broke when as much as approximately 15 tons of the powder had been passed therethrough. Yet, the powder did not burst into atmosphere being held between the pipe 2 and the support pipe 3.

The pipe vibration and noise resulting from the powder transportation was reduced to half the conventional level. No bending-induced refractories breakage occurred, either.

Although the powder projecting nozzles 30 in the burner tip 13 increased in diameter from 3 mm to 5 mm when 10 tons of the powder had passed, the burner proved to have a much longer life than the conventional ones.

Claims

1. A powder conveying pipe (1) comprising
   (a) a pressurized-transportation pipe (2) of wear-
       resistant material passing a powder entrained in a
       conveying fluid under pressure;
   (b) a support pipe (3) coaxially accomodating the pressurized-transportation pipe (2); and
   (c) a support member (4) of vibration-absorbing material
       disposed between said two pipes so that the
       pressurized-transportation pipe (2) is supported
       in the support pipe (3).


2. A pipe according to claim 1, wherein the pressurized-
transportation pipe (2) is made of oxide-based refractory
material.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 646 569 (KÜTTNER) *Page 4, 3rd paragraph; page 7, 1st paragraph; page 10, line 18 to page 11, line 1; figure 1* | 1 | B 65 G 53/52 F 16 L 57/00 |
| A,P | GB-A-2 078 900 (KILARD) *Page 1, lines 86-93; figure 1* | 1 | |
| A | FR-A-2 406 747 (SEPEREF) *Page 3, lines 7-19; figure 2* | 1 | |
| A | GB-A- 972 361 (THE BRITISH OXYGEN COMPANY) *Page 1, lines 11-56; page 2, lines 26-64; figure 1* | 1,2 | |
| A | US-A-4 005 741 (JUGANSON) *Column 1, lines 9-14; column 2, lines 17-30* | 2 | TECHNICAL FIELDS SEARCHED (Int. Cl. 3) |
| A | DE-C-1 072 946 (ESSER-WERKE) | | B 65 G F 16 L F 23 K F 27 D B 05 B |
| A | GB-A- 800 956 (ESSER-WERKE) | | |

The present search report has been drawn up for all claims

| Place of search THE HAGUE | Date of completion of the search 09-09-1982 | Examiner PHOA Y.E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82